# EUROPEAN PATENT SPECIFICATION

(11) **EP 2 043 376 B1**
(45) Date of publication and mention of the grant of the patent: **17.07.2013**
(21) Application number: 06768220.3
(22) Date of filing: 14.07.2006
(51) Int. Cl.: H04W 72/08, H04W 36/00

(54) **RETRIEVAL OF INFORMATION DURING HANDOVER ON RESSOURCES USED IN A NEIGHBOURING CELL**
INFORMATION BESCHAFFUNG IN HANDOVER BEZÜGLICH RESSOURCEN, DIE IM NACHBARZELLEN BENUTZT SIND
RECUPERATION D'INFORMATIONS LORS DE HANDOVERS SUR LES RESSOURCES UTILISEES DANS UNE CELLULE VOISINE

(43) Date of publication of application: 01.04.2009
(73) Proprietor: Fujitsu Ltd., Kawasaki-shi, Kanagawa 211-8588 (JP)
(72) Inventor: SHIMOMURA, Tsuyoshi, Kawasaki-shi, Kanagawa 211-8588 (JP)
(74) Representative: Fenlon, Christine Lesley
(86) International application number: PCT/JP2006/314060
(87) International publication number: WO 2008/007437

(56) References cited:
- EP-A1- 1 418 776
- EP-A1- 1 587 268
- EP-A2- 1 347 614
- JP-A- 09 046 753
- JP-A- 11 262 043
- JP-A- 2003 348 007
- US-A- 5 930 716

## Description

### TECHNICAL FIELD

The present invention relates to a mobile communication system and a base station, and more particularly to a mobile communication system for switching a base station, with which a mobile terminal communicates at a cell boundary, from a first base station to a second base station by handover control, and a base station.

### BACKGROUND ART

In a cellular system, decreasing inter-cell interference is one important subject. For a cellular system that uses the OFDM (Orthogonal Frequency Division Multiplex) transmission method, a frequency reuse, which assigns some frequency groups in order to each cell repeatedly, has been proposed (see Patent Document 1 of JP 2004-159345 A). According to this frequency assigning method, inter-cell interference decreases as the frequency reuse factor increases, but the bandwidth of the frequency that can be used per cell decreases, so the frequency utilization efficiency that can be achieved is limited.

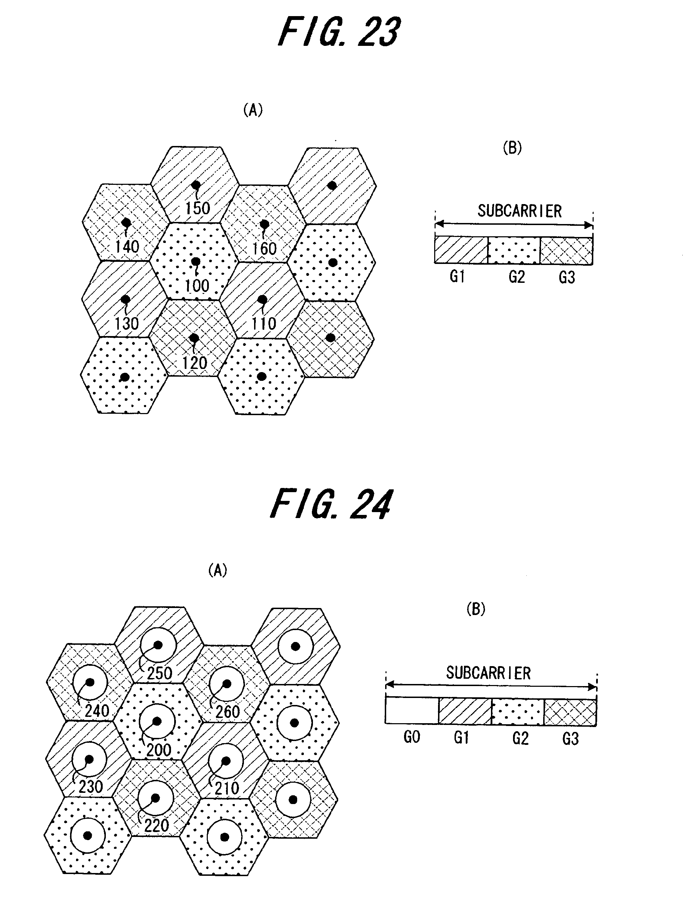

Fig. 23 is a diagram showing a first frequency reuse method in a cellular mobile communication system that uses OFDM, where subcarriers (frequency) in OFDM are divided into three groups, G1 to G3, as shown in (B), and a same frequency group is not assigned to adjacent cells so as to prevent interference, as shown in (A). For example, if a carrier group G2 is assigned to the base station 100, subcarrier groups G1 and G3, not used by base station 100, are assigned to base stations 110, 120, 130, 140, 150 and 160, which are adjacent to the base station 100, such that a same subcarrier group is not assigned to adjacent base stations. If subcarriers are divided into 3 and used, as mentioned above, the frequency reuse factor is 3, whereby the frequencies to be used at each base station are made different from the frequencies of other base stations.
However, in the case of the frequency reuse method in Fig. 23, the frequencies that can be used in a cell is limited to 1/3. In other words, in the case of the frequency reuse method in Fig. 23, as the frequency reuse factor increases, the inter-cell interference decreases, but the bandwidth of the frequency that can be used per cell decreases, and frequency utilization efficiency is more restricted.

Fig. 24 is a diagram showing a second frequency reuse method in a cellular mobile communication system that uses OFDM. In the second frequency reuse method, a cell is divided into a close area (cell center area) which is close to a base station and a long distance area (cell edge area) which is distant from the base station, and the frequency utilization rate is increased by setting the frequency reuse factor in the cell center area to "1". In other words, in Fig. 24, the subcarriers (frequency) of OFDM are divided into 4 groups, G0 to G3, as shown in (B), and the subcarrier group G0 is assigned to the cell center area of each cell, and the subcarrier group G1 to G3 is assigned to the cell edge area of each cell, such that a same subcarrier group is not assigned to the cell edge areas of adjacent base stations, as shown in (A). For example, if a carrier group G2 is assigned to a cell edge area of the base station 200, subcarrier groups G1 or G3, not used by the base station 200, are assigned to the cell edge areas of the base stations 210, 220, 230, 240, 250 and 260 which are adjacent to the base station 200, such that a same subcarrier group is not assigned to cell edge areas of adjacent base stations. By assigning a frequency subcarriers like this, the frequency reuse factor becomes 3 in the cell edge area, but becomes 1 in the cell center area, so the frequency utilization efficiency improves.

In a cellular system, traffic conditions change depending on the hour and on the cell. Therefore in the case of a method of dividing the whole frequency into fixed 4 groups and assigning the frequencies of each group to the cell center area and the cell edge area of each cell, just like the second frequency reuse method in Fig. 24, the frequency assignment may be optimized in a certain traffic condition, but cannot be optimized in other traffic conditions. Hence it is desirable to maximize the available frequencies in a cell while avoiding inter-cell interference, according to the traffic conditions of the cell. Then the frequency utilization efficiency can be increased while suppressing interference, and the number of users (number of mobile terminals) that can be accommodated in each cell can be increased.
EP 1418776 discloses a frequency reuse method in an OFDM mobile communication system. Frequency resources available to each base station are divided into at least four frequency groups and a different or the same frequency reuse distance is set for each of the frequency groups. The frequency groups are sequentially assigned to cell areas of each base station such that lower frequency groups are available to a near cell area and higher frequency resource groups are available to a remote cell area.
US 5930716 discloses a radio channel allocating system, in which a service area is divided into a plurality of cells. The service area is divided into a plurality of outer cell parts. Inside the outer cell parts, inner cell parts are disposed at common positions that are almost centre positions of the outer cell parts. A channel controlling circuit is adapted for allocating radio channels of the base stations, where the base station for the inner cell part communicates radio waves with mobile stations in the inner cell part, and the base station for the outer cell part communicates radio waves with mobile stations in the outer cell part.
This is the case of considering the frequency group (referred to as frequency block) as a radio resource, but the case of assigning frequency blocks is also true for a transmission method which must assign different code groups or pilot patterns to cells. For example, in the case of the CDMA transmission method in which interference is decreased by using different code groups for adjacent cells, inter-cell interference changes depending on the distance of reuse. Therefore in the case of a CDMA transmission system, it is desirable to maximize the number of codes that can be used in a cell, while avoiding inter-cell interference, according to the traffic conditions of the cell.

### DISCLOSURE OF THE INVENTION

As described above, it is desirable to maximize the number of radio resources (e.g. frequencies, codes) that can be used in a cell, while avoiding inter-cell interference, according to the traffic conditions of the cell, but to perform such control, the interference status from adjacent cells must be obtained. But in order to obtain radio resource assignment information on all mobile terminals existing in adjacent cells, the communication volume for the control information becomes enormous, and the frequency utilization efficiency drops more than as stated in the above mentioned Patent Document 1.
With the foregoing view, it is an object of the present invention to efficiently obtain the interference status from adjacent cells.
It is another object of the present invention to adaptively assign a radio resource to mobile terminals in a cell based on the interference status from adjacent cells. The invention is disclosed in method claims 1 and 2 and in apparatus claim 7.

### BRIEF DESCRIPTION OF THE DRAWINGS

Fig. 1 is a diagram depicting the principle of the present invention;
Fig. 2 is a block diagram depicting a base station of a first embodiment;
Fig. 3 is a diagram depicting a handover control sequence in a case where a mobile terminal switches a base station to communicate with in a cell boundary, from a first base station to a second base station;
Fig. 4 is a diagram depicting a cell center area and a cell edge area;
Fig. 5 is a block diagram depicting a radio resource management unit;
Fig. 6 is an RB number/cumulative count correspondence table which indicates a cumulative reception result for each resource block number;
Fig. 7 is an RB assignment priority table corresponding to the RB number/cumulative count correspondence table in Fig. 6;
Fig. 8 is a flow chart depicting a resource assignment control by a resource assignment control unit;
Fig. 9 are tables for describing the resource block assignment control in a case where a target base station has two or more adjacent base stations, and a mobile terminal exists in the cell center area of the target base station;
Fig. 10 are tables describing another resource block assignment control in a case where a target base station has two or more adjacent base stations, and a mobile terminal exists in a cell center area of the target base station;
Fig. 11 is a diagram depicting a handover control sequence having a step of notifying a resource block, which a source base station assigned to a mobile terminal, to a target base station;
Fig. 12 is a diagram depicting a handover control sequence having a step of notifying a resource block, which a target base station assigned to a mobile terminal, to a source base station;
Fig. 13 is a block diagram depicting a radio resource management unit of a second embodiment;
Fig. 14 are tables showing the correspondence of RB numbers in adjacent cells A and B, and the number of mobile terminals (cumulative count) to which a resource block, having this RB number, is assigned in adjacent cells;
Fig. 15 are graphs for describing an upper limit value of the transmission power of resource blocks having the RB number in cells A and B;
Fig. 16 is a flow chart depicting a resource block assignment control considering transmission power which a mobile terminal requires;
Fig. 17 is a flow chart depicting downlink transmission power control in a case where an increase of transmission power is requested from a mobile terminal;
Fig. 18 is a flow chart depicting uplink transmission power control of a mobile terminal;
Fig. 19 is a diagram depicting a control of a third embodiment;
Fig. 20 is a block diagram depicting a base station of the third embodiment;
Fig. 21 is a flow chart depicting a control of the base station of the third embodiment;
Fig. 22 is a flow chart depicting an update of radio resource assignment priority according to the fourth embodiment;
Fig. 23 is a diagram depicting a first frequency reuse method in a cellular mobile communication system which uses OFDM; and
Fig. 24 is a diagram depicting a second frequency reuse method in a cellular mobile communication system which uses OFDM.

### BEST MODE FOR CARRYING OUT THE INVENTION

### · First aspect

In a mobile communication system that switches a base station, with which a mobile terminal communicates in a cell boundary, from a first base station to a second base station according to handover period, the mobile terminal or the base station notifies the assignment information on the radio resource assigned to the mobile terminal to an adjacent base station during handover period, and the adjacent base station assigns a radio resource to a mobile terminal existing in the cell of the adjacent base station based on the assignment information of the radio resource so that interference is decreased.
In this mobile communication system, the mobile terminal notifies the assignment information on the radio resource assigned from the first base station, to the second base station during handover period, the second base station collects the assignment information and assigns a radio resource to a mobile terminal existing in the cell of the second base station based on the collected radio resource assignment information, so that interference from the first base station is decreased.
In the mobile communication system, the first base station notifies the assignment information on the radio resources assigned by the first base station to mobile terminals in handover process, to the second based station during handover period, and the second base station collects the assignment information and assigns a radio resource to a mobile terminal existing in the cell of the second base station based on the collected radio resource assignment information, so that interference from the first base station is decreased.
In the mobile communication system, the second base station notifies the assignment information on the radio resources assigned by the second base station to mobile terminals in handover process, to the first base station during handover period, and the first base station collects the radio resource assignment information, and assigns a radio resource to a mobile terminal existing in the cell of the first base station based on the collected radio resource assignment information, so that interference from the second base station is decreased.

### · Second aspect

In a mobile communication system that switches a base station, with which a mobile terminal communicates in a cell boundary, from a first base station to a second base station according to handover period, one base station notifies the assignment information on the radio resources assigned by this base station to all the mobile terminals existing in the edge area, to an adjacent base station during handover period, and the adjacent base station assigns a radio resource to a mobile terminal existing in the cell of the adjacent base station based on the notified radio resource assignment information, so that the interference is decreased.
In the mobile communication system, the first base station notifies the assignment information on the radio resources assigned by the first base station to all the mobile terminals existing in the edge area of the cell of the first station, to the second base station during handover period, and the second base station assigns a radio resource to a mobile terminal existing in the cell of the second base station based on the radio resource assignment information notified by the first base station, so that interference from the first base station is decreased.
In the mobile communication system, the second base station notifies the assignment information on the radio resources assigned by the second base station to all the mobile terminals existing in the edge area of the cell of the second base station, to the first base station during handover period, and the first base station assigns a radio resource to a mobile terminal existing in the cell of the first base station based on the radio resource assignment information notified by the second base station, so that interference from the second base station is decreased.

### · Third aspect -

In a base station constituting the mobile communication system of the first aspect, the base station has: a receive unit which receives an assignment information on the radio resource of a mobile terminal in handover process, a collection unit which collects the radio resource assignment information received from the mobile terminals, and a radio resource assignment unit which assigns a radio resource to a mobile terminal existing in the cell of the base station based on the collected radio resource assignment information, so that interference from adjacent stations is decreased.

### · Fourth aspect

In the base station constituting the mobile communication system of the second aspect, the base station has: a receive unit which receives assignment information on the radio resources assigned by an adjacent base station to all the mobile terminals existing in an edge area of a cell of the base station from the adjacent base station during handover period, and a radio resource assignment unit which assigns a radio resource to a mobile terminal existing in the cell of the base station based on the radio resource assignment information received from the adjacent base station, so that interference from the adjacent station is decreased.

### (A) Principle of present invention

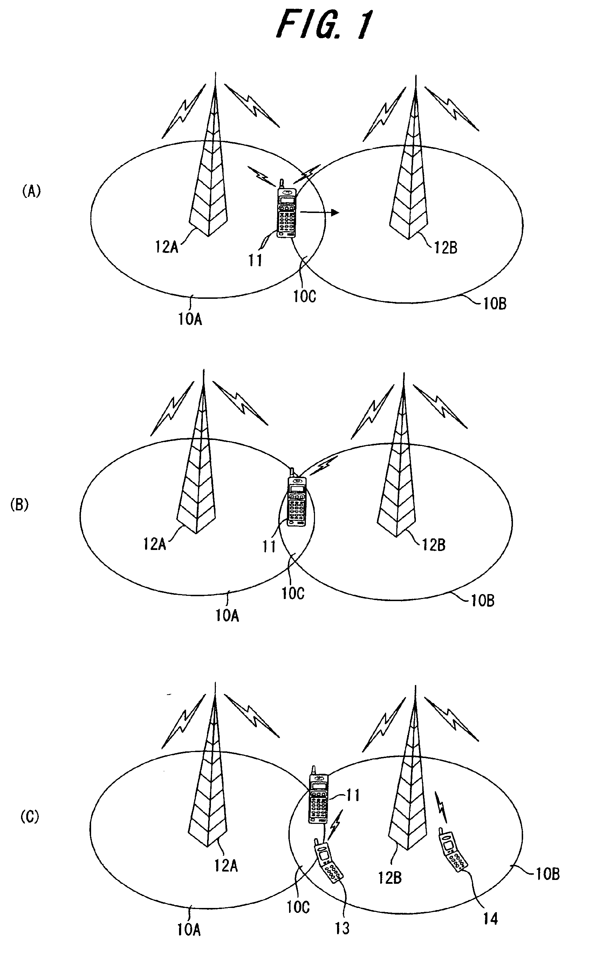

Fig. 1 is a diagram showing the principle of the present invention. A method for applying the present invention to a system which assigns a plurality of radio resources appropriately to a plurality of users, and performs communication, will now be described. For example, in a mobile communication system which uses the OFDM transmission method, it is assumed that N (e.g. 512) number of subcarrier frequencies are divided into a plurality of resource blocks (frequency resource blocks), and each resource block is adaptively assigned to cells.
By handover control, a base station with which the mobile terminal 11 communicates is switched from a first base station 12A to a second base station 12B in a boundary 10C of the cells 10A and 10B ((A) of Fig. 1).
During this handover, the mobile terminal 11 or the first base station 12A notifies the number of the resource block (RB) which the first base station 12A assigned to the mobile terminal 11, to the second base station 12B ((B) of Fig. 1).
The second base station 12B collects the notified assignment information about each resource block, and assigns the resource blocks to mobile terminals 13 and 14 existing in its own cell based on the collected resource block assignment information, so that interference from the first base station 12A is decreased ((C) of Fig. 1). For example, every time an RB number of a handover mobile terminal is received during handover, the second base station 12B increments the RB number receive count by +1, and estimates that this count value is the number of mobile terminals to which the resource block with this RB number has been assigned in the cell edge area of the first base station 12A. Then the second base station 12B makes RB assignment to mobile terminals existing in the cell edge area of its own cell, assigning high priority to the resource block of which count value is low.

The above is an example when the first base station 12A notifies the resource blocks, which the first base station 12A assigned to the mobile terminal 11, to the second base station 12B during handover when the base station with which the mobile terminal 11 communicates is switched from the first base station 12A to the second base station 12B. However, during handover, the second base station 12B may notify the resource blocks , assigned to the mobile terminal 11, to the first base station 12A, and the first base station 12A may collect the assignment information on the notified resource block, and assigns resource blocks to a mobile terminal existing in its own cell based on the collected resource block assignment information, so that interference from the second base station 12B is decreased.
Also the above is the case when the resource block number assigned to a mobile terminal to be handed over is notified to the adjacent base station, but one base station may notify the assignment information on the resource blocks assigned to all the mobile terminals existing in the cell edge area of its own cell to the adjacent base station. For example, the first base station 12A notifies the numbers of the resource blocks assigned to all the mobile terminals existing in the cell edge area of it own cell to the second base station 12B, and the second base station 12B assigns resource blocks to mobile terminals existing in its own cell based on the resource block assignment information, so that interference from the first base station 12A is decreased.

### (B) First embodiment

### (a) Configuration of base station

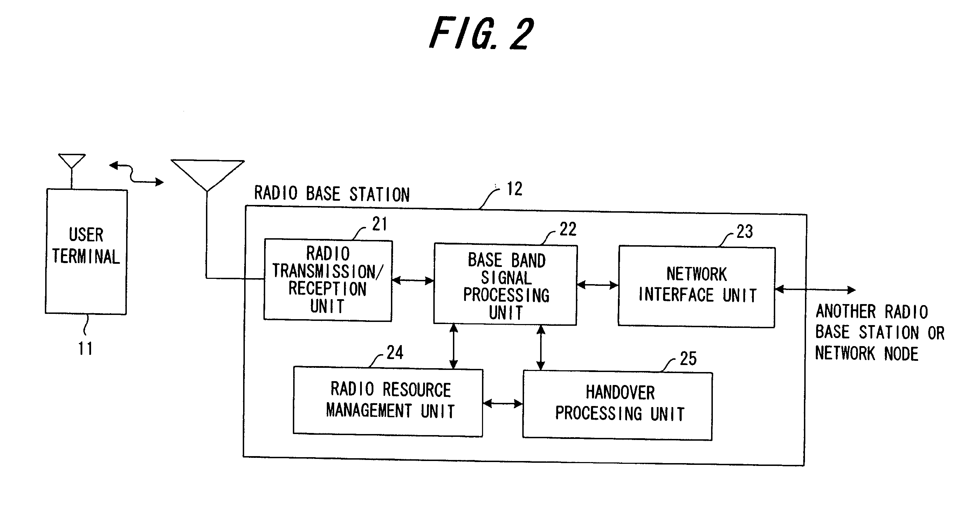

Fig. 2 is a block diagram showing a radio base station 12 of a first embodiment, which has a radio transmission/reception unit 21, a base band signal processing unit 22, a network interface unit (network IF unit) 23, a radio resource management unit 24 and a handover processing unit 25.
The radio transmission/reception unit 21 converts the frequency of a signal, generated by the base band signal processing unit 22 which performs base band signal processing, into a radio frequency, and transmits it via an antenna. The radio transmission/reception unit 21 also detects the receive signal, converts it into a base band signal, and inputs it to the base band signal processing unit 22. The network IF unit 23 controls the transmission/reception of control data and user data between the radio base station 12 and a base station control device (network node) or another radio base station, and transmits/receives user data and control data to/from the base band signal processing unit 22.
The base band signal processing unit 22 performs such processing as error correction encoding processing, framing processing and data modulation on a transmission signal, and inputs the result to the radio transmission/reception unit 21, and performs demodulation of the receive signal which is input from the radio transmission/reception unit 21, error correction decoding processing and multiplex/demultiplex processing of data. The base band signal processing unit 22 also inputs user data, which was input from the radio transmission/reception unit 21, to the network IF unit 23, and inputs the user data, which was input from the network IF unit 23, to the radio transmission/reception unit 21. The base band signal processing unit 22 also inputs control data, which arrives from the mobile terminal 11 and another base station, to the radio resource management unit 24, or handover processing unit 25, and transmits a predetermined control data to the mobile terminal 11 or another base station via the radio transmission/reception unit 21 or the network IF unit 23.
The radio resource management unit 24 collects assignment information on resource blocks in an adjacent base station during handover, and assigns resource blocks to mobile terminals existing in its own cell based on the collected resource block assignment information, so that interference from the adjacent base station is decreased. The operation of the radio resource management unit 24 will be described later.

### (b) The handover control sequence

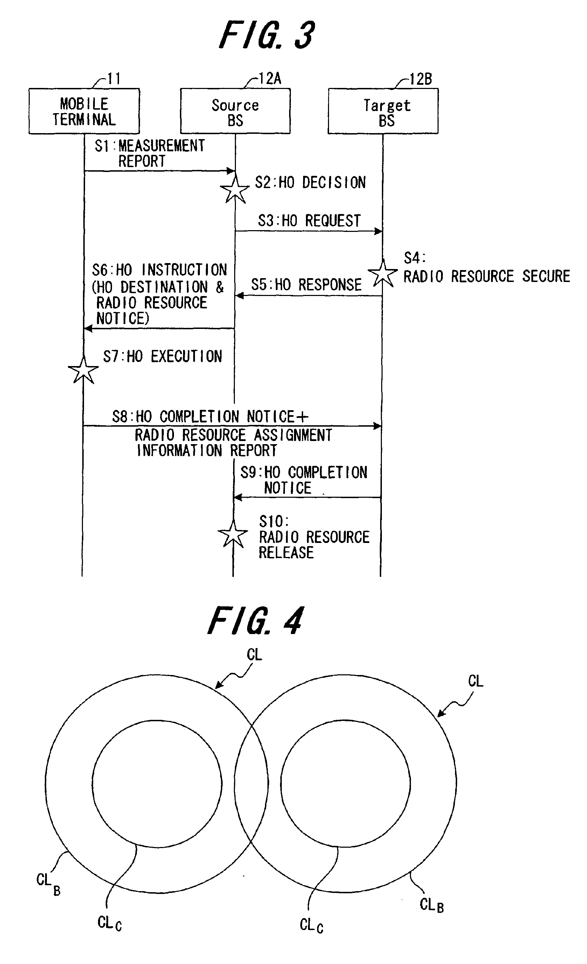

Handover processing unit 25 executes handover control according to the handover control sequence. Fig. 3 is a diagram showing a handover control sequence when a base station with which the mobile terminal 11 (see Fig. 1) communicates in cell 10A is switched from a first base station (source base station) 12A to a second base station (target base station) 12B.
The source base station 12A, which is in communication with a mobile terminal 11, requests the mobile terminal 11 to measure and report the radio status periodically. The mobile terminal 11, which received the radio status measurement/report request, measures the receive level from a nearby base stations, and reports it to the base station 12A (step S1). The base station 12A refers to the reported signal level, and decides the execution of handover if handover is necessary (step S2), and determines a target base station 12B to be the handover destination (step S3). In Fig. 3, HO refers to "handover".
Then the source base station 12A requests the determined target base station 12B to set the radio resource (HO request, step S3). Receiving the HO request, the target base station 12B secures the radio resource (frequency resource blocks), sets it up (step S4), and responds with the radio resource setup completion to the source base station 12A (HO response, step S5).

The source base station 12A, which received the HO response, notifies the target base station 12B and the resource block to the mobile terminal 11, and instructs the mobile terminal 11 to switch the communication base station to the target base station 12B (HO instruction, step S6). Based on the HO instruction, the mobile terminal 11 executes a control to switch the communication base station from the source base station 12A to the target base station 12B (HO execution, step S7).
Then the mobile terminal 11 notifies handover completion to the target base station 12B, and also notifies the radio resource (frequency resource blocks) assigned by the source base station 12A to the target base station 12B(step S8). The target base station 12B, which received the HO completion notice, notifies handover completion to the source base station 12A, and performs summation processing of the received frequency resource block (step S9). By the handover completion notice, the source base station 12A releases the radio resource (frequency resource blocks) which has been assigned to the mobile terminal 11 (step S10). If the base station 12(see Fig.2), to which the handover processing unit 25 belongs, is the source base station, the handover processing unit 25 executes the handover control processing for the source base station 12A in Fig. 3, and if it is the target base station, the handover processing unit 25 executes the handover control processing for the target base station 12B in Fig. 3.

### (c) Radio resource assignment control conditions

The radio resource is assigned considering the following.
(1) As Fig. 4 shows, the cell CL is divided into a cell center area CL_{C} and cell edge area CL_{B}, and the radio resource, such as frequency resource blocks, is assigned to the respective area using different standards.
(2) Interference is not generated, even if a same frequency resource block is assigned to the cell center areas CL_{C} and CL_{C} of the two adjacent base stations, but interference is generated if a same frequency resource block is assigned to the cell edge areas CL_{B} and CL_{B} of the two adjacent base stations.
(3) The frequency resource block is assigned so that interference is not generated, and the frequency utilization efficiency in the cells improves.

### (d) Radio resource management unit

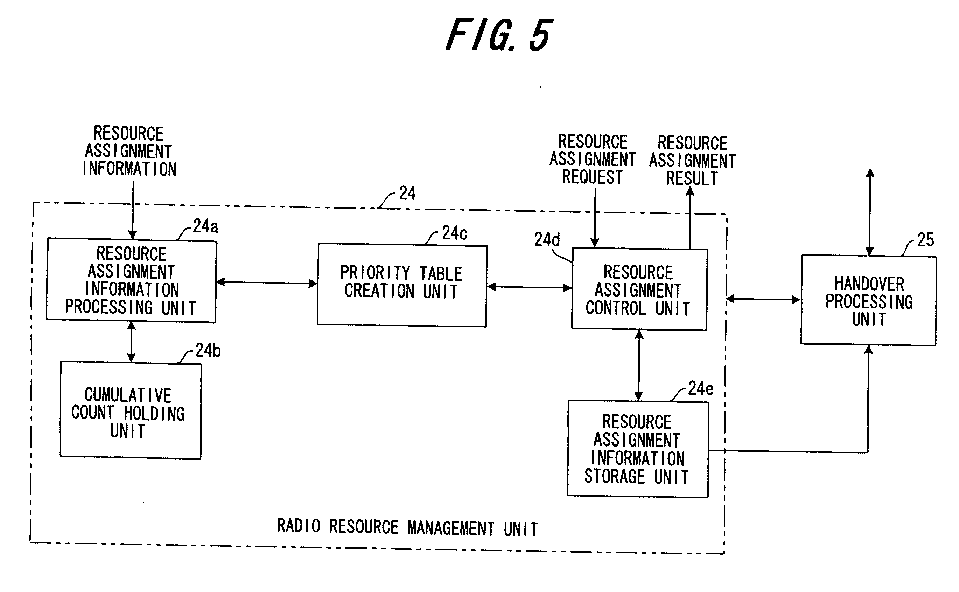

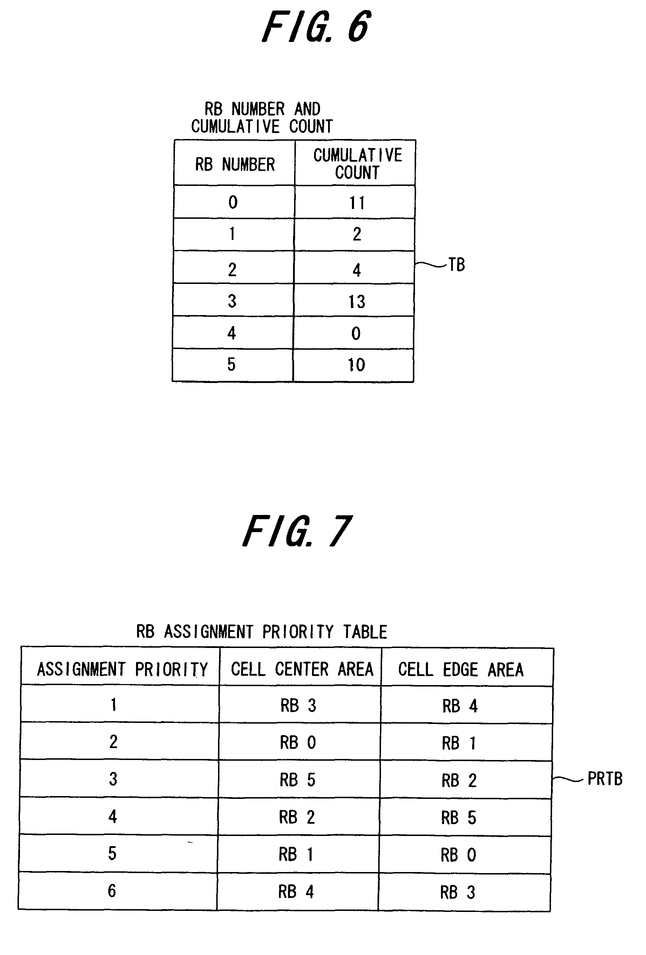

Fig. 5 is a block diagram showing the radio resource management unit 24, which has a resource assignment information processing unit 24a, which receives a resource assignment information from a mobile terminal and processes it, a cumulative count holding unit 24b which stores an RB number/cumulative count correspondence table, a priority table creation unit 24c which creates a resource assignment priority table, a resource assignment control unit 24d which refers to the resource assignment priority table and performs resource assignment control for the mobile terminals, and a storage unit 24e which stores the resource assignment information.
When a number of the frequency resource block (hereafter simply "resource block number") is received from the mobile terminal during handover in step S8 (Fig. 3), the resource assignment information processing unit 24a increments the number of mobile terminals to which the resource block having this resource block number is assigned, by +1, and stores the count result (cumulative count) in the cumulative count holding unit 24b. Fig. 6 is an example of an RB number/cumulative count correspondence table TB, which indicates the cumulative reception result for each resource block number, and shows an example of dividing the frequencies of OFDM into 6 blocks. The resource assignment information processing unit 24a continuously updates the correspondence table so that the latest RB number/cumulative count correspondence table TB is stored with in a predetermined time period from the current time.

As Fig. 6 shows, the number of times when the mobile terminal, to which the resource block RB = 0 is assigned by the adjacent base station 12A, is moved and handed over to the target station 12B, is 11, the number of times when the mobile terminal, to which the resource block RB = 1 is assigned, is moved and handed over to the target base station 12B is 2, and the number of times when the mobile terminal, to which the resource block RB = 5 is assigned, is moved and handed over to the target base station 12B is 10 times. Based on the cumulative count in Fig. 6, the resource block assignment status in the cell edge area CL_{B} of the base station 12A, adjacent to the base station 12B, can be estimated, and it can be estimated that the number of mobile terminals to which RB = 3 is assigned is the highest, and the number of mobile terminals to which RB = 4 is assigned is the lowest, which is 0.
Therefore if the resource block RB = 4 is assigned with the highest priority to a mobile terminal existing in the cell edge area of the base station 12B, adjacent to the base station 12A, interference of the resource blocks in the cell edge areas in the base stations 12A and 12B is not generated. The number of mobile terminals to which a same resource block can be assigned is limited, and if the number of resource blocks RB = 4 that are assigned reaches a set value or more, then the resource block RB = 2 is assigned with priority. In this way, the possibility of the generation of interference of the resource blocks in the cell edge areas of the base stations 12A and 12B can be eliminated, and frequency utilization efficiency in the cell edge areas can be improved.

The priority table creation unit 24c refers to the RB number/cumulative count correspondence table TB, and creates a resource block assignment priority table PRTB (Fig. 7) for the cell edge area and cell center area. In other words, in the assignment priority table for the cell edge area, the assignment priority of the resource block is higher as the cumulative count is smaller. And in the assignment priority table for the cell center area, the assignment of the resource block priority is higher as the cumulative count is larger.
Fig. 7 is an example of an RB assignment priority table PRTB corresponding to the RB number/cumulative count correspondence table TB in Fig. 6, where the assignment priority for the cell edge area is in the sequence of RB4 RB1 → RB2 → RB5 → RB0 → RB3, and the assignment priority for the cell center area is in the sequence of RB3 → RB0 → RB5 → RB2 → RB1 → RB4. In the cell edge area and cell center area, the assignment priority of the resource block has a reverse sequence. This is because the number of mobile terminals to which a same resource block can be assigned is limited. In other words, if the resource block for the cell edge area and resource block for the cell center area are the same, the number of mobile terminals to which the resource block is assigned in the cell edge area decreases, and frequency utilization efficiency decreases.

If a resource assignment request is generated at call originating time or during handover, the resource assignment control unit 24d assigns the resource block based on the RB assignment priority table PRTB in Fig. 7, depending on whether the mobile terminal exists in the cell center area or in the cell edge area. Based on the resource assignment result and resource release result, the storage unit 24e stores the assignment status of the resource, which is assigned to the mobile terminals existing in the cell edge area and cell center area of its own cell.

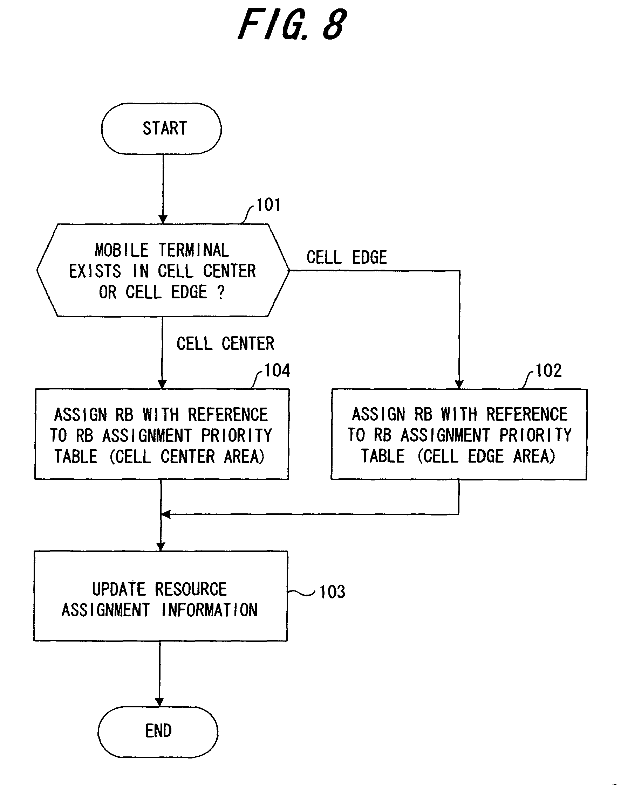

Fig. 8 is a flow chart for the resource assignment control by the resource assignment control unit 24d. If a request to assign a resource block to a mobile terminal is generated, the resource assignment control unit 24d judges whether the mobile terminal exists in the cell center area or cell edge are (step S101). Whether the mobile terminal exists in the cell center area or cell edge are is determined based on the position information received from the mobile terminal. The position information can be measured by a GPS receiver, for example. Since the transmission power of the mobile terminal increases as the mobile terminal becomes more distant from the base station, the position of the mobile terminal can also be determined by receiving the transmission power value from the mobile terminal.
If the mobile terminal exists in the cell edge area, a resource block is determined according to priority, referring to the RB assignment priority table PRTB for the cell edge area, and this resource block is assigned to the mobile terminal (step S102). In this case, the number of mobile terminals to which same resource block can be assigned is limited, so if the limit is exceeded, the resource block of which priority is highest next is assigned to the mobile terminal.
Then the resource assignment information of the resource assignment information storage unit 24e is updated (step S103).
If the mobile terminal exists in the cell center area, a resource block is determined according to priority, referring to the RB assignment priority table PRTB for the cell center area, and this resource block is assigned to the mobile terminal (step S104). Then the resource assignment information of the resource assignment information storage unit 24e is updated (step S104).

### (e) Variant form of radio resource assignment control

### · First variant form

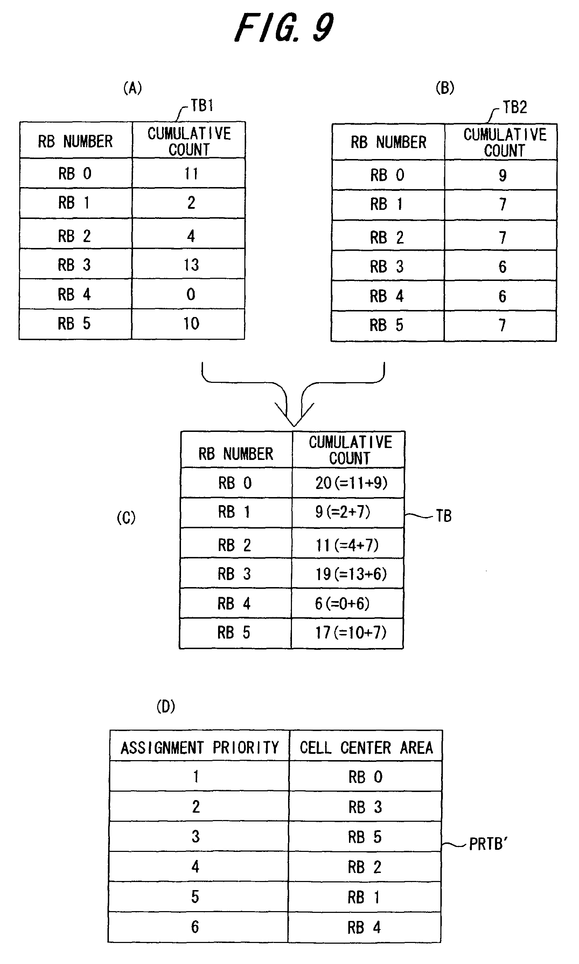

The processing flow in Fig. 8 shows a radio resource assignment control when the number of base stations adjacent to a base station is 1. However, 2 or more base stations normally exist adjacent to a base station. In this case, the radio resource assignment control is performed as follows.
The RB number/cumulative count correspondence table TB shown in Fig. 6 and RB assignment priority table PRTB for the cell edge area shown in Fig. 7 are created for each adjacent base station. If a mobile terminal exists in the cell edge area, an adjacent base station to which the mobile terminal is closest is determined, and the resource block is assigned to the mobile terminal using the RB assignment priority table PRTB according to the closest adjacent base station.
If a mobile terminal exists in the cell center area, the resource block cannot be assigned to the mobile terminal in the same way as the case of a mobile terminal existing in the cell edge area. This is because the assignment priority for the cell center area in the created RB assignment priority table is different depending on the adjacent base station. Therefore if the mobile terminal exists in the cell center area, the radio resource is assigned as follows. Fig. 9 are tables describing resource block assignment control when there are 2 or more base stations adjacent to the base station of interest, and mobile terminals exist in the cell center area of the base station of interest.
The resource assignment information processing unit 24a creates the RB number/cumulative count correspondence tables TB1 and TB2 for each adjacent base station, and stores them to the cumulative count holding unit 24b for RB numbers ((A) and (B) of Fig. 9). The priority table creation unit 24c adds the cumulative counts corresponding to a same RB number in the two correspondence tables TB1 and TB2, and creates a composite RB number/cumulative count correspondence table TB based on the addition result ((C) of Fig. 9). Then the priority table creation unit 24c creates an assignment priority table PRTB'((D) of Fig. 9) for the cell center area, so that high priority is given to a resource block of which cumulative count is larger, referring to the correspondence table TB ((C) of Fig. 9). Then the resource assignment control unit 24d assigns a resource block to a mobile terminal existing in the cell center area according to priority, referring to this assignment priority table PRTB'.

### · Second variant form

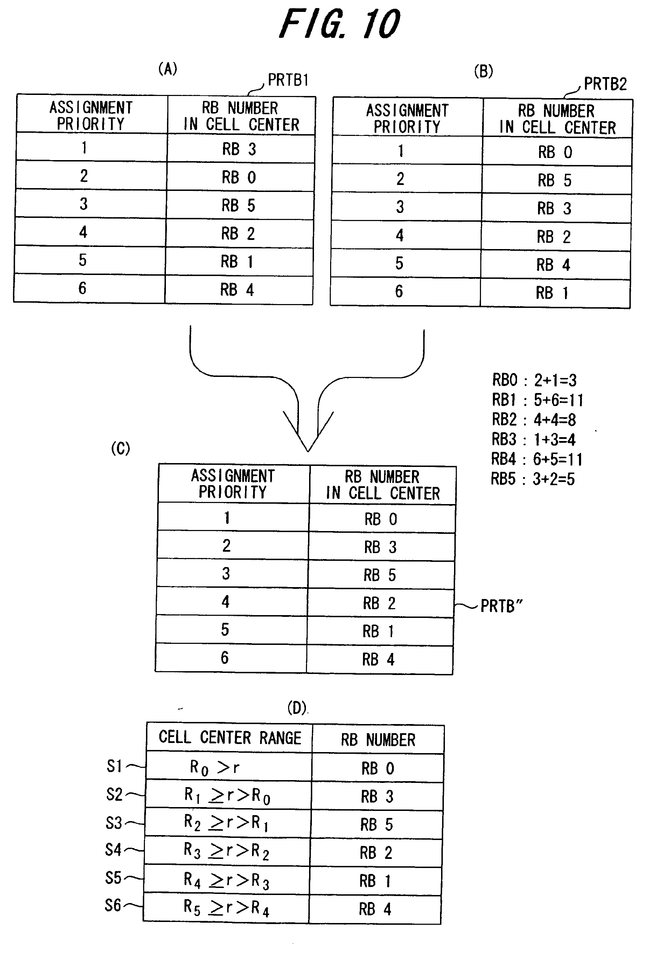

Fig. 10 are tables describing another resource block assignment control when there are 2 or more base stations adjacent to a base station of interest, and mobile terminals exist in a cell center area of the base station of interest.
The resource assignment information processing unit 24a creates the RB number/cumulative count correspondence table for each adjacent base station, and the priority table creation unit 24c creates the assignment priority tables PRTB1 and PRTB2 ((A) and (B) of Fig. 10) for the cell center area, so that higher priority is given to a resource block of which cumulative count is larger respectively for each correspondence table. Then the assignment priorities having a same RB number in the assignment priority tables PRTB1 and PRTB2 are added, and the assignment priority table PRTB" shown in (C) of Fig. 10 is generated by giving high assignment priority to the RB number of which addition result is smaller. For example, in the case of the resource block number RB = 0, the priority in the assignment priority table PRTB1 is 2, and the priority in the assignment priority table PRTB2 is 1, so the additions result is 3 (= 2 + 1). In the case of the resource block number RB = 1, the priority in the assignment priority table PRTB1 is 5, and the priority in the assignment priority table PRTB2 is 6, so the addition result is 11 (= 5 + 6).
Then as (D) of Fig. 10 shows, the cell center area is divided into 6, and the resource blocks having assignment priorities 1 to 6 in the assignment priority table PRTB" in (C) of Fig. 10 are assigned to each cell center area range S1 to S6 respectively.
If a resource block assignment request is received from a mobile terminal existing in the cell center area in this state, the resource assignment control unit 24d determines the cell center area range Si (i = 1 to 6) where the mobile terminal exists, determines the RB number according to the cell center range Si based on the correspondence table in (D) of Fig. 10, and assigns a resource block having this RB number to the mobile terminal.
The resource block may be assigned to the mobile terminal existing in the cell center area according to the priority using the assignment priority table PRTB" without creating the correspondence table in (D) of Fig. 10.

### (f) Variant form of transmission/reception of resource assignment information

### · First variant form

In the first embodiment, in step S8 of the handover control sequence, the mobile terminal 11 notifies the radio resource (resource blocks) assigned by the source base station 12A to the target base station 12B. However, the source base station 12A may notify the radio resource to the target base station 12B.

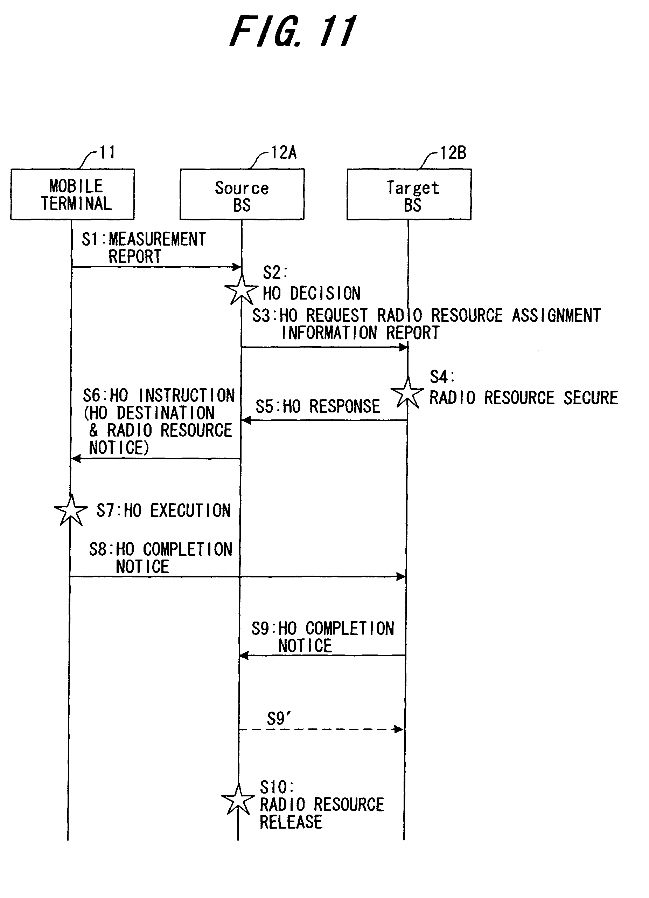

Fig. 11 is a diagram showing the handover control sequence having a step of notifying, by the source base station 12A, the resource block which the source base station 12A assigned to the mobile terminal, to the target base station 12B. The differences from the sequence in Fig. 3 are: (1) in step S3, the source base station 12A requests the target base station 12B to set the radio resource, and the source base station 12A notifies the resource blocks assigned to the mobile terminal 11 to the target base station 12B, and (2), in step S8, the mobile terminal 11 does not notify the radio resource (resource blocks) to the target base station 12B.
The source base station 12A may notify the radio resource to the target base station 12B, not in step S3, but in step S9', after the handover completion is notified.

### · Second variant form

In the first embodiment, the resource blocks , which the source base station 12A assigned to the mobile terminal 11, is notified to the target base station 12B. However, the radio resource (resource blocks), which the target base station 12B assigned to the mobile terminal 11 by handover, may be notified to the source base station 12A. Thereby, the source base station 12A can assign a resource block to a mobile terminal in its own cell using control the same as the first embodiment.

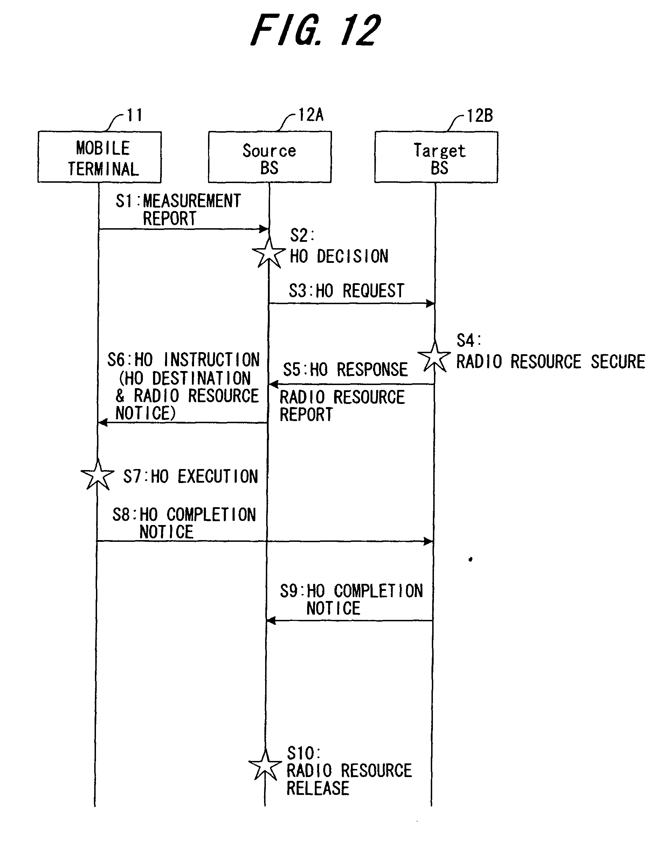

Fig. 12 is a diagram showing the handover control sequence having a step of notifying the resource block, which the target base station 12B assigned to the mobile terminal, to the source base station 12A. The difference from the sequence in Fig. 3 is that in step S5, the target base station 12B responds with radio resource setup completion to the source base station 12A, and notifies the resource blocks which the target base station 12B assigned to the mobile terminal 11, to the source base station 12A.
The target base station 12B may notify the resource blocks , which the target base station 12B assigned to the mobile terminal 11, to the source base station 12A, when the handover completion is notified in step S9.

### · Third variant form

In the first variant form, only the resource blocks, which the source base station 12A assigned to the mobile terminal 11, is notified to the target base station 12B, but the resource block numbers which the source base station 12A assigned to all the mobile terminals existing in the cell edge area of its own cell may be notified to the target base station 12B.
In the second variant form, only the resource blocks, which the target base station 12B assigned to the mobile terminal 11, is notified to the source base station 12A, but the resource block numbers, which the target base station 12B assigned to all the mobile terminals existing in the cell edge area of its own cell, may be notified to the source base station 12A.
Thereby, the resource assignment information processing unit 24a of the radio resource management unit 24 (see Fig. 5) creates the RB number/cumulative count correspondence table TB in Fig. 6 based on the resource assignment information of all the notified mobile terminals, the priority table creation unit 24c creates the RB assignment priority table PRTB using the RB number/cumulative count correspondence table TB, and the resource assignment control unit 24d assigns the resource block to the mobile terminals according to the priority based on the priority table PRTB.
Since the RB number/cumulative count correspondence table TB created like this accurately reflects the resource assignment state of the adjacent base stations, the third variant form can decrease interference more efficiently, and improve resource utilization efficiency.

### (C) Second embodiment

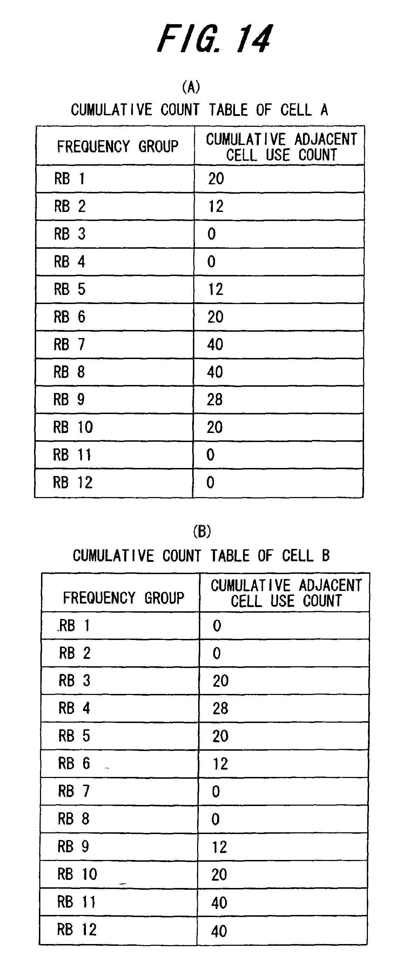

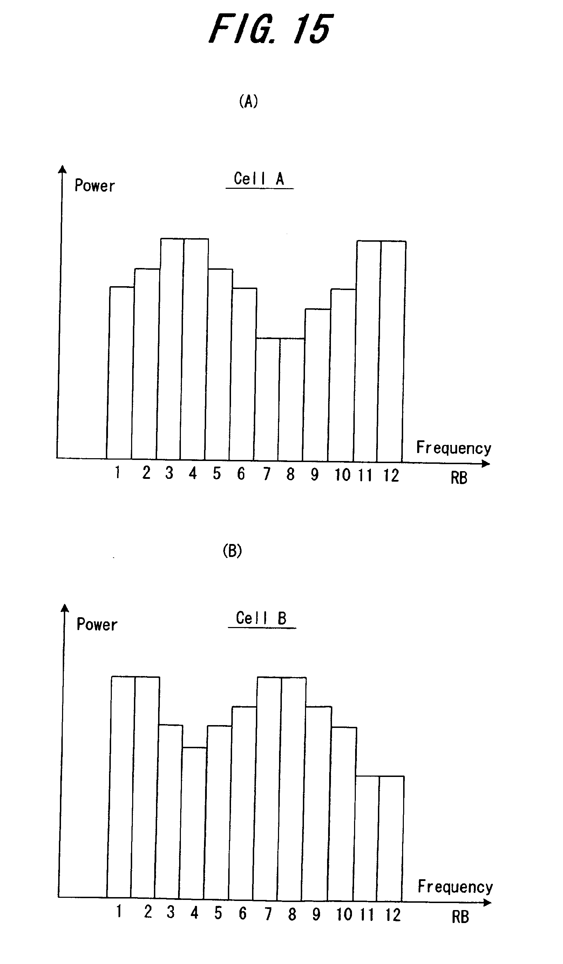

A second embodiment controls the transmission power of a radio resource in parallel with the control of the first embodiment or each variant form thereof.

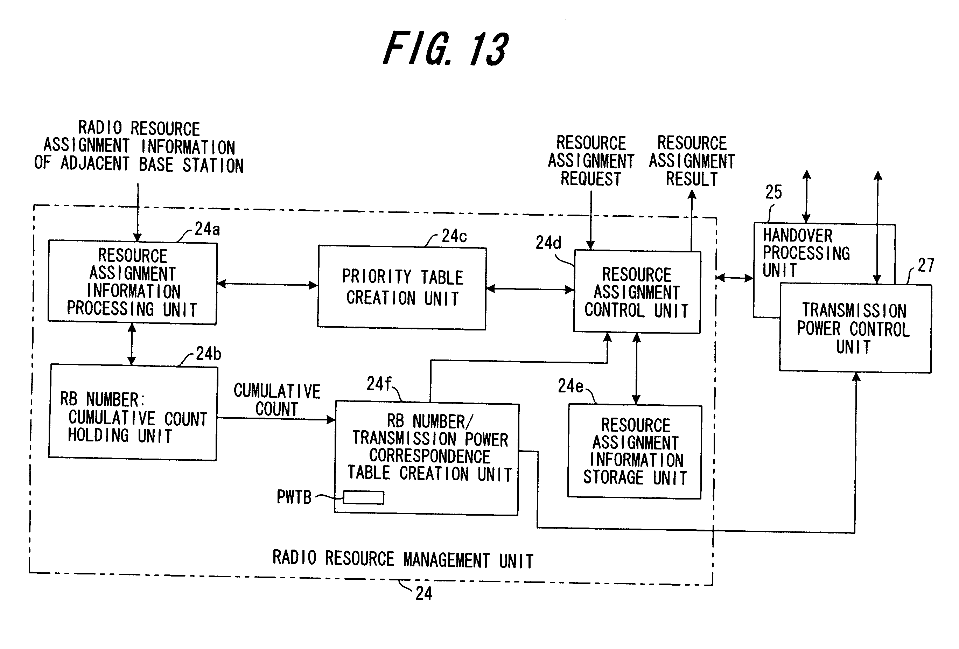

Fig. 13 is a block diagram showing a radio resource management unit of the second embodiment, where the same composing elements as the radio resource management unit 24 (Fig. 5) of the first embodiment are denoted with the same symbols. The difference is that the second embodiment has an RB number/transmission power correspondence table creation unit 24f and a transmission power control unit 27. The RB number/transmission power correspondence table PWTB is for specifying a transmission power upper limit value according to the cumulative count of the RB number determined by the RB number/cumulative count correspondence table TB, and as the cumulative count is lower, the transmission power upper limit value of the resource block increases.
(A) and (B) of Fig. 14 show the correspondence of the RB numbers in cells A and B which are adjacent to each other, and a number of mobile terminals (cumulative count) to which the resource block having this RB number is assigned in the cell edge of the adjacent cell. According to the resource assignment control of the first embodiment, in regard to an arbitrary resource block, if the cumulative count of one cell is low, the cumulative count of the other cell is high. If the cumulative count of one cell is high, on the other hand, the cumulative count of the other cell is low.
In the case of (A) and (B) of Fig. 14, the transmission power upper limit value corresponding to the RB number in cells A and B are as shown in (A) and (B) of Fig. 15, where as the cumulative count is smaller, the transmission power upper value of the resource block is larger.

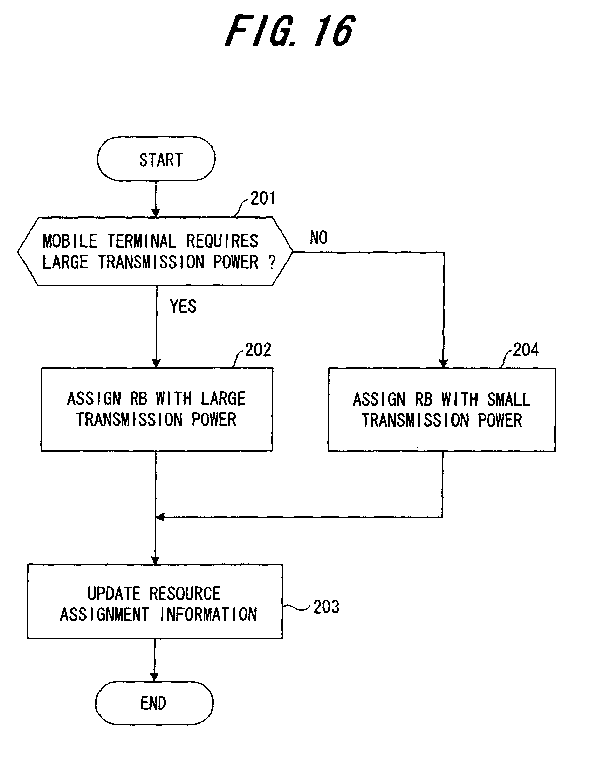

Fig. 16 is a flow chart for the resource block assignment control considering the transmission power of the mobile terminal.
When a resource block assignment request is received from a mobile terminal, the resource assignment control unit 24d checks if this mobile terminal requires large transmission power (step S201), and assigns a resource block of which transmission power upper limit value is large (resource block of which cumulative count is small) with reference to the RB number/transmission power correspondence table PWTB if high transmission power is required (step S202). Then the resource assignment control unit 24d updates the resource assignment information of the resource assignment information storage unit 24e (step S203). If the mobile terminal does not require large transmission power, the resource assignment control unit 24d assigns a resource block of which transmission power (resource block of which cumulative count is large) (step S203), then performs the processing in step S204.
In this way, the resource block (frequency group) can be assigned to a mobile terminal according to the required transmission power by using the control in Fig. 16. If the cumulative count of one cell is small, the cumulative count of the other cell is large, and the frequency groups corresponding to the large transmission power utilized by users located in each cell edge area of two adjacent cells, can be different, whereby mutual interference can be decreased.

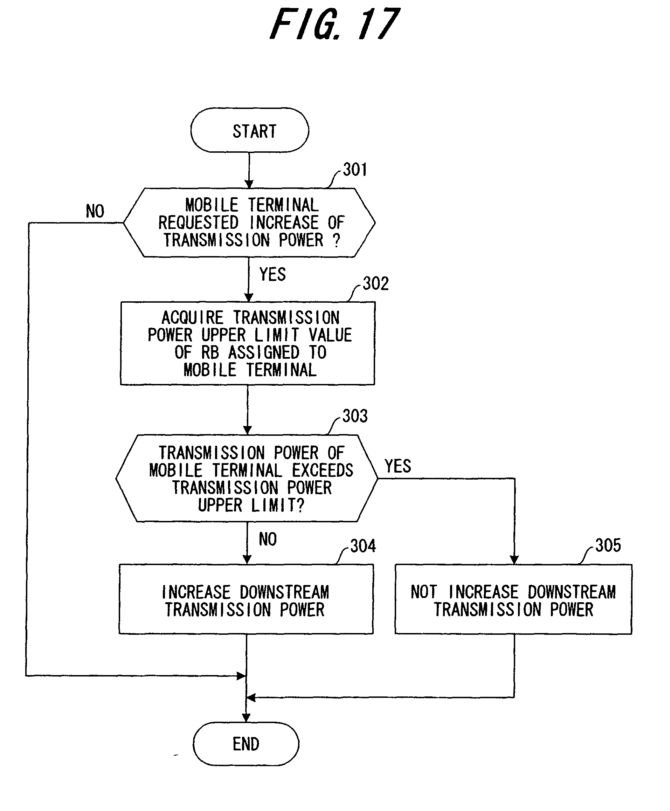

Fig. 17 is a flow chart for a downstream transmission power control when a mobile terminal requests to increase the transmission power.
The transmission power control unit 27 monitors whether a mobile terminal existing in the cell edge area requested to increase the transmission power (step S301), and if an increase in transmission power is requested, the transmission power control unit 27 acquires the transmission power upper limit value of the resource block assigned to this mobile terminal from the RB number/transmission power correspondence table PWTB (step S302). Then the transmission power control unit 27 checks whether the transmission power upper limit value would be exceeded if transmission power were increased by a predetermined amount according to the transmission power increase request (step S303), and increases the downstream transmission power if not exceeded (step S304) or does not increase the downstream transmission power if exceeded (step S305).

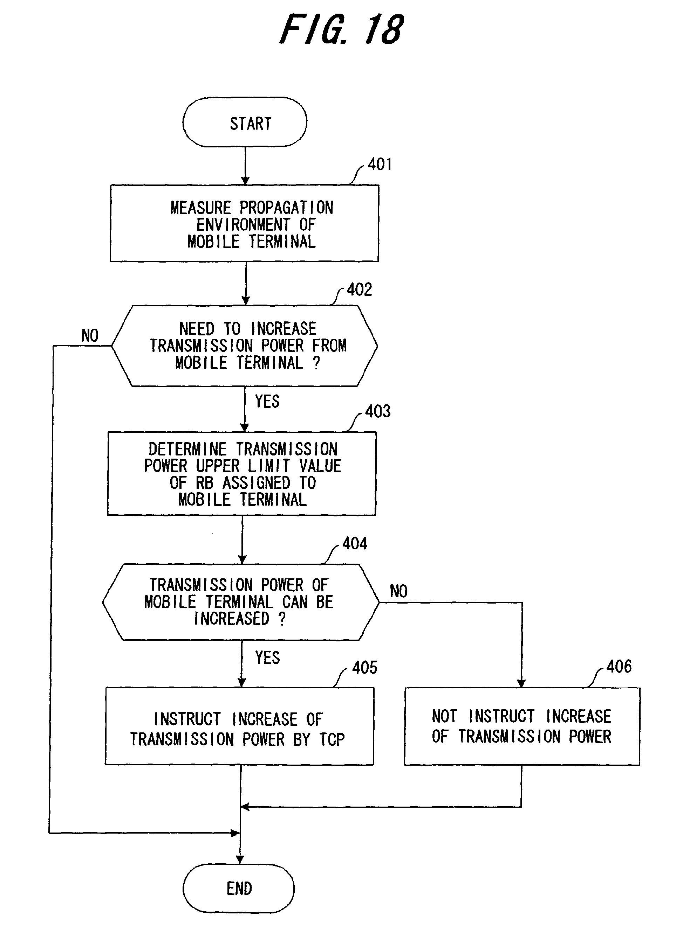

Fig. 18 is a flow chart for the upstream transmission power control of a mobile terminal.
A propagation environment measurement unit (not illustrated) measures the propagation environment of the mobile terminal using the receive signal received from the mobile terminal (step S401), and the transmission power control unit 27 checks whether the transmission power from the mobile terminal must be increased based on this propagation environment measurement result (step S402). If the transmission power from the mobile terminal must be increased, the transmission power control unit 27 acquires the transmission power upper limit value of the resource block assigned to the mobile terminal from the RB number/transmission power correspondence table PWTB (step S403). Then the transmission power control unit 27 checks whether the transmission power upper limit value would be exceeded if the transmission power of the mobile terminal were increased by a predetermined amount (step S404), and instructs the mobile terminal to increase the upstream transmission power if not exceeded (step S405) or does not instruct to increase the upstream transmission power if exceeded (step S406).

### (D) Third embodiment

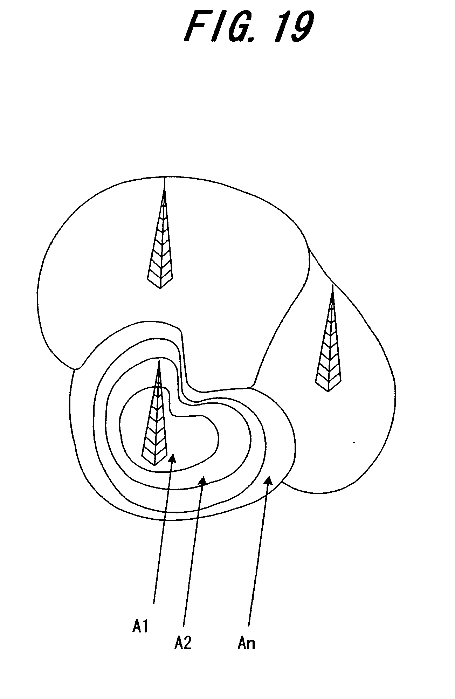

As Fig. 19 shows, the shape of a cell is not always regular form (e.g. circle, hexagon) in an actual geometric environment. In the third embodiment, each base station knows the shape of its own cell by collecting position information from the handover user. And, based on the shape of its own cell, the base station identifies in which of the cell center area ranges A1 to An the mobile terminal exists, and performs resource assignment control and transmission power control of the first embodiment and second embodiment.

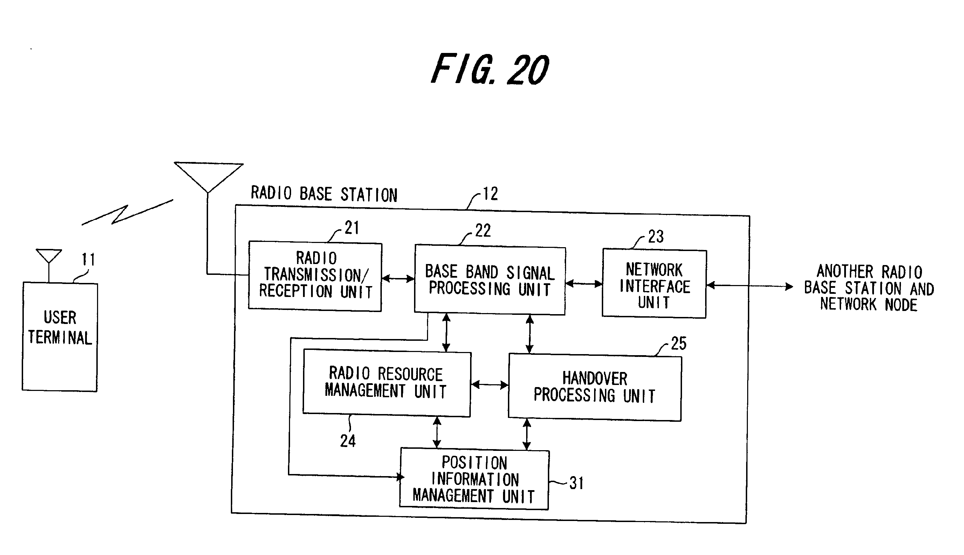

Fig. 20 is a block diagram showing a base station of the third embodiment, where the same composing elements as the base station of the first embodiment in Fig. 2 are denoted with the same symbols. The difference from Fig. 2 is that the position information management unit 31 is disposed so as to collect position information from the mobile terminal during handover, and to specify the cell shape of the base station based on the collected position information.

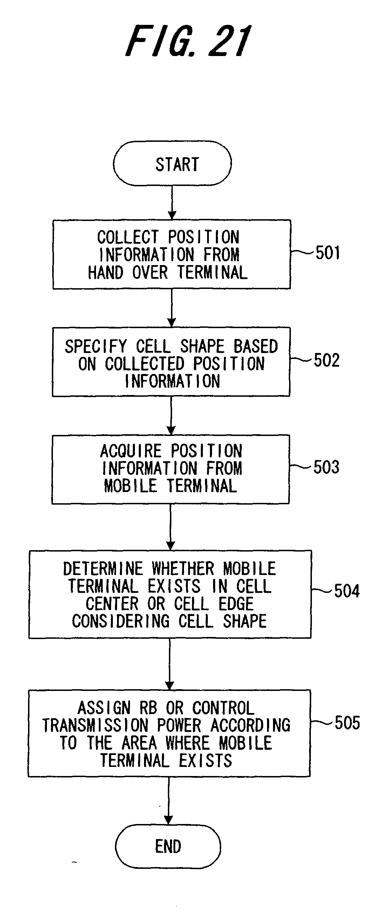

Fig. 21 is a flow chart for a control of a base station of the third embodiment.
The position information management unit 31 collects position information from a mobile terminal during handover (step S501), and specifies the cell shape of the base station based on the collected position information (step S502). If a resource block assignment request is received from a mobile terminal in its own cell in this state, the radio resource management unit 24 acquires position information of this mobile terminal (step S503), and judges whether the mobile terminal exists in the cell center area or cell edge area considering this position information and the cell shape specified in step S502 (step S504), and assigns a resource block based on the area where the mobile terminal exists in accordance with the first embodiment, and performs transmission power control in accordance with the second embodiment (step S505).

### (F) Fourth embodiment

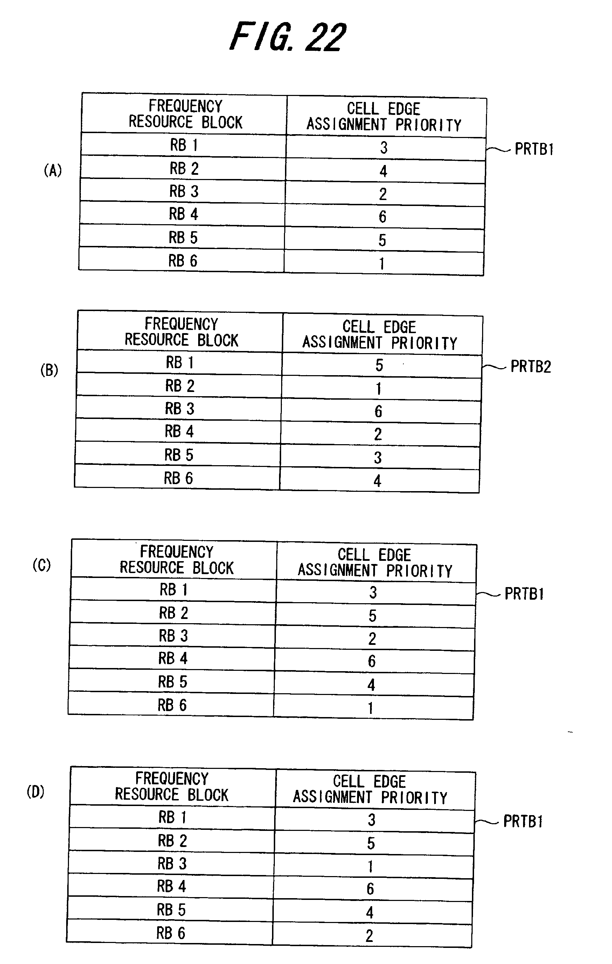

The first embodiment is a case of notifying only the resource blocks assigned to the mobile terminal in handover process to the base station, but in the fourth embodiment, the base station notifies radio resource assignment information in the cell center area and cell edge area of its own cell to an adjacent base station.
When the mobile terminal 11 (see Fig. 1) enters handover state, the source base station 12A and target base station 12B exchange the radio resource assignment information via the network, and each of the base stations 12A and 12B update the radio resource assignment priority using the radio resource assignment information of the other base station, so that inter-cell interference decreases.
An example of updating the radio resource assignment priority according to the fourth embodiment will now be described with reference to Fig. 22.
When the mobile 11 moves into a boundary 10C between the cell 10A (Fig. 1) and cell 10B and handover is generated, the base stations 12A and 12B notify the assignment priority tables PRTB1 and PRTB2 for the frequency resource block shown in (A) and (B) of Fig. 22 to each other. Based on the assignment priority table PRTB2 of cell B, the base station 12A in cell A updates the assignment priority table PRTB1 of cell A as follows.
(1) The base station 12A in cell 10A recognizes the resource block having the highest priority and the resource block having the lowest priority in the assignment priority table PRTB2 of cell 10B. In the case of the example in fig. 22, RB2 is the resource block having the highest priority, and RB3 is the resource block having the lowest priority.
(2) The base station 12A in cell 10A checks whether the priority of the resource block RB2 is the lowest in the assignment priority table PRTB1, and performing nothing if it is the lowest. If not the lowest, the base station 12A decreases the rank of the resource block RB2 by 1, and increases the rank of the resource block RB5, of which priority is one rank lower than the resource block RB2, by 1 (see (C) of Fig. 22).
(3) The base station 12A in cell 10A checks whether the priority of the resource block RB3 is the highest in the assignment priority table PRTB1, and performing nothing if it is the highest. If not the highest, the base station 12A increases the rank of the resource block RB3 by 1, and decreases the rank of the resource block RB6, of which priority is one rank higher than the resource block RB3, by 1 (see (D) of Fig. 22).
In cell 10B as well, the assignment priority table PRTB2 is updated using the same algorithm. Based on the assignment priority tables PRTB1 and PRTB2 updated like this, the base stations 12A and 12B assign the resource block, then interference between users existing in the cell edge area can be decreased.

The above mentioned example is a case when the base stations 12A and 12B, which are adjacent to each other, notify the assignment priority tables PRTB1 and PRTB2 of the resource block to each other during handover, but they may notify each other periodically. Herein, one base station updates its own radio resource assignment priority using the radio resource assignment information notified by other base station only when the number of times that a handover generates between said one base station and the other base station(handover generation count), is larger than the set values.
For example, the radio resource block assignment priority tables PRTB1 and PRTB2 ((A) and (B) of Fig. 22) are exchanged between the base station 12A in cell 10A and the base station 12B in cell 10B at every predetermined time. If the handover generation count L, since the priority table is exchanged between the base stations the last time, is a certain threshold L1 or less, each base station does not update the priority table. If the handover generation count L is greater than the threshold L1 and less than threshold L2, the priority table is updated in the same way as the fourth embodiment. When the handover generation count L is greater than the threshold L2, the base station 12A in cell 10A updates the assignment priority table PRTB1 as follows, based on the assignment priority table PRTB2 of cell 10B.
(1) In the assignment priority table PRTB2 of the base station 12B, the base station 12A recognizes the resource block having the highest priority, and the resource block having the lowest priority. In the case of the example in Fig. 22, RB2 is the resource block having the highest priority, and RB3 is the resource block having the lowest priority.
(2) The base station 12A checks whether the priority of the resource block RB2 is already the lowest in the assignment priority table PRTB1, and performs nothing if it is the lowest. If the priority of the resource block RB2 is the second lowest, the rank of the resource block RB2 is lowered by 1, and the rank of the resource block, of which priority is one rank lower than the resource block RB2, is raised by 1. If the priority of the resource block RB2 is neither the lowest nor the second lowest, the base station 12A lowers the rank of the resource block RB2 by 2, and raises the resource blocks, of which priority is one rank lower and two ranks lower than the resource block RB2, by 1 respectively.
(3) The base station 12A checks whether the priority of the resource block RB3 is already the highest in the assignment priority table PRTB1, and performs nothing if it is the highest. If the priority is the second highest, the rank of the resource block RB3 is raised by 1, and the rank of the resource block, of which priority is one rank higher than the resource block RB3, is lowered by 1. If the priority of the resource block RB3 is neither the highest nor the second highest, the base station 12A raises the rank of the resource block RB3 by 2, and lowers the resource blocks, of which priority is one rank upper and two ranks upper than the resource block RB3, by 1 respectively.
The base station 12B also updates the assignment priority table PRTB2 according to the same algorithm.
In the above embodiments and variant forms, a case when the radio resource is the frequency resource block was described, but the radio resource of the present invention is not limited to this, and codes and pilot patterns, for example, may be used.

### · Effect

According to the present invention, the interference status from adjacent cells can be efficiently acquired during handover.
Also according to the present invention, the radio resource can be adaptively assigned to the mobile terminals in its own cell based on the interference status from adjacent cells. In other words, the base station can assign a radio resource to a mobile terminal in its own cell, so as to improve radio resource utilization efficiency, while decreasing interference from adjacent cells.

## Claims

1. A resource assignment method for a mobile communication system that switches a base station, with which a mobile terminal (11) communicates in a cell boundary, from a first base station (12A) to a second base station (12B) by handover control, **characterized in that**
the mobile terminal notifies assignment information on a radio resource assigned by the first base station(12A), to the second base station (12B) during handover period, and
the second base station (12B) counts the number of mobile terminals assigned to a radio resource in the first base station (12A) for each radio resource, based on the notified radio resource assignment information, and assigns, with priority, a radio resource for which the count value is low, to a mobile terminal existing in a cell edge area of a cell of the second base station.

2. A resource assignment method for a mobile communication system that switches a base station, with which a mobile terminal (11) communicates in a cell boundary, from a first base station (12A) to a second base station (12B) by handover control, **characterized in that**
the first base station (12A) notifies assignment information on a radio resource, assigned to a mobile terminal in handover process, to the second base station (12B) during handover period, and
the second base station (12B) counts the number of mobile terminals assigned to a radio resource in the first base station (12A) for each radio resource, based on the notified radio resource assignment information, and assigns, with priority, a radio resource for which the count value is low, to a mobile terminal existing in a cell edge area of a cell of the second base station.

3. The resource assignment method according to Claim 1 or 2, wherein the second base station (12B) assigns, with priority, a radio resource having a high count value to a mobile terminal existing in the center area of the cell of the second base station (12B).

4. The resource assignment method according to Claim 3, wherein the second base station (12B) sums up the count value counted based on the radio resource assignment information notified from all the adjacent base station, for each resource, and assigns, with priority, a radio resource for which the summed value is high, to a mobile terminal existing in the cell center area of the second base station.

5. The resource assignment method according to Claim 1 or 2, wherein the second base station (12B) counts the number of mobile terminals to which a radio resource is assigned in an adjacent base station for each radio resource, based on the notified radio resource assignment information of the mobile terminal, and controls an upper limit value of transmission power of each radio resource based on the count value of the radio resource.

6. The resource assignment method according to Claim 5, wherein the second base station (12B) assigns a radio resource, for which the count value is low, to a mobile terminal which requires high transmission power.

7. A base station (12) for a mobile communication system that switches a base station with which a mobile terminal communicates in a cell boundary according to handover control, **characterized by** comprising:
a receive unit (21) configured to receive assignment information on a radio resource assigned by an adjacent base station to a mobile terminal in handover process from the adjacent base station during handover period;
a collection unit (24a) configured to collect radio resource assignment information received from the adjacent base station, and to count the number of mobile terminals to which a radio resource is assigned in the adjacent base station for each radio resource, based on the notified radio resource assignment information of the mobile terminal; and
a radio resource assignment unit (24d) configured to assign, with priority, a radio resource for which the count value is low, to a mobile terminal existing in a cell edge area of a cell of the base station.

8. The base station according to Claim 7, further comprising a transmission power control unit (27) configured to control an upper limit value of the transmission power of the radio resource based on the count value of the radio resource.

9. The base station according to Claim 7, further comprising:
a cell shape specification unit (31) configured to collect position information of the mobile terminal along with the radio resource assignment information, from the mobile terminal, and to specify a cell shape of the base station based on the collected position information; and
a decision unit (24) configured to determine whether a mobile terminal exists in a center area or an edge area of the cell of the base station, based on the position information of the mobile terminal and the cell shape.

## Patentansprüche

1. Verfahren zur Zuordnung von Betriebsmitteln für ein Mobilkommunikationssystem, das eine Basisstation, mit welcher ein mobiles Endgerät (11) an einem Zellrand kommuniziert, durch eine Weiterschaltungssteuerung von einer ersten Basisstation (12A) auf eine zweite Basisstation (12B) umschaltet, **dadurch gekennzeichnet, dass**
das mobile Endgerät der zweiten Basisstation (12B) während der Weiterschaltperiode Zuordnungsinformationen über ein durch die erste Basisstation (12A) zugeordnetes Funkbetriebsmittel mitteilt, und
die zweite Basisstation (12B) die Anzahl von mobilen Endgeräten, die in der ersten Basisstation (12A) einem Funkbetriebsmittel zugeordnet sind, für jedes Funkbetriebsmittel basierend auf mitgeteilten Informationen über die Funkbetriebsmittelzuordnung zählt und ein Funkbetriebsmittel, für welches der Zählwert niedrig ist, mit Priorität einem mobilen Endgerät zuordnet, das in einem Zellkantenbereich einer Zelle der zweiten Basisstation vorhanden ist.

2. Verfahren zur Zuordnung von Betriebsmitteln für ein Mobilkommunikationssystem, das eine Basisstation, mit welcher ein mobiles Endgerät (11) an einem Zellrand kommuniziert, durch eine Weiterschaltungssteuerung von einer ersten Basisstation (12A) auf eine zweite Basisstation (12B) umschaltet, **dadurch gekennzeichnet, dass**
die erste Basisstation (12A) der zweiten Basisstation (12B) während der Weiterschaltperiode Zuordnungsinformationen über ein Funkbetriebsmittel mitteilt, das einem mobilen Endgerät im Weiterschaltprozess zugeordnet wird, und
die zweite Basisstation (12B) die Anzahl von mobilen Endgeräten, die in der ersten Basisstation (12A) einem Funkbetriebsmittel zugeordnet sind, für jedes Funkbetriebsmittel basierend auf mitgeteilten Informationen über die Funkbetriebsmittelzuordnung zählt und ein Funkbetriebsmittel, für welches der Zählwert niedrig ist, mit Priorität einem mobilen Endgerät zuordnet, das in einem Zellkantenbereich einer Zelle der zweiten Basisstation vorhanden ist.

3. Verfahren zur Zuordnung von Betriebsmitteln nach Anspruch 1 oder 2, wobei die zweite Basisstation (12B) ein Funkbetriebsmittel mit einem hohen Zählwert mit Priorität einem mobilen Endgerät zuordnet, das im zentralen Bereich der Zelle der zweiten Basisstation (12B) vorhanden ist.

4. Verfahren zur Zuordnung von Betriebsmitteln nach Anspruch 3, wobei die zweite Basisstation (12B) den Zählwert, der basierend auf den Informationen über die Funkbetriebsmittelzuordnung gezählt wird, die von allen benachbarten Basisstationen mitgeteilt werden, für jedes Betriebsmittel summiert und ein Funkbetriebsmittel, für welches der summierte Wert hoch ist, mit Priorität einem mobilen Endgerät zuordnet, das im zentralen Zellbereich der zweiten Basisstation vorhanden ist.

5. Verfahren zur Zuordnung von Betriebsmitteln nach Anspruch 1 oder 2, wobei die zweite Basisstation (12B) die Anzahl von mobilen Endgeräten, welchen ein Funkbetriebsmittel in einer benachbarten Basisstation zugeordnet ist, für jedes Funkbetriebsmittel basierend auf den mitgeteilten Informationen über die Funkbetriebsmittelzuordnung des mobilen Endgeräts zählt und einen oberen Grenzwert von Sendeleistung jedes Funkbetriebsmittels basierend auf dem Zählwert des Funkbetriebsmittels steuert.

6. Verfahren zur Zuordnung von Betriebsmitteln nach Anspruch 5, wobei die Basisstation (12B) ein Funkbetriebsmittel, für welches der Zählwert niedrig ist, einem mobilen Endgerät zuordnet, das eine hohe Sendeleistung erfordert.

7. Basisstation (12) für ein Mobilkommunikationssystem, das eine Basisstation, mit welcher ein mobiles Endgerät an einem Zellrand kommuniziert, gemäß einer Weiterschaltungssteuerung umschaltet, **dadurch gekennzeichnet, dass** sie umfasst:
eine Empfangseinheit (21), die so konfiguriert ist, dass sie Zuordnungsinformationen über ein Funkbetriebsmittel, das einem mobilen Endgerät durch eine benachbarte Basisstation im Weiterschaltprozess zugeordnet wird, während der Weiterschaltperiode von der benachbarten Basisstation empfängt;
eine Erfassungseinheit (24a), die so konfiguriert ist, dass sie Informationen über die Funkbetriebsmittelzuordnung erfasst, die von der benachbarten Basisstation empfangen werden, und die Anzahl von mobilen Endgeräten, welchen ein Funkbetriebsmittel in der benachbarten Basisstation zugeordnet ist, für jedes Funkbetriebsmittel basierend auf den mitgeteilten Informationen über die Funkbetriebsmittelzuordnung des mobilen Endgeräts zählt; und
eine Funkbetriebsmittelzuordnungseinheit (24d), die so konfiguriert ist, dass sie ein Funkbetriebsmittel, für welches der Zählwert niedrig ist, mit Priorität einem mobilen Endgerät zuordnet, das in einem Zellkantenbereich einer Zelle der Basisstation vorhanden ist.

8. Basisstation nach Anspruch 7, ferner umfassend eine Sendeleistungssteuereinheit (27), die so konfiguriert ist, dass sie einen oberen Grenzwert von Sendeleistung des Funkbetriebsmittels basierend auf dem Zählwert des Funkbetriebsmittels steuert.

9. Basisstation nach Anspruch 7, ferner umfassend:
eine Zellformspezifikationseinheit (31), die so konfiguriert ist, dass sie Positionsinformationen des mobilen Endgeräts zusammen mit den Informationen über die Funkbetriebsmittelzuordnung vom mobilen Endgerät erfasst und eine Zellform der Basisstation basierend auf den erfassten Positionsinformationen spezifiziert; und
eine Entscheidungseinheit (24), die so konfiguriert ist, dass sie basierend auf den Positionsinformationen des mobilen Endgeräts und der Zellform bestimmt, ob ein mobiles Endgerät in einem zentralen Bereich oder einem Kantenbereich der Zelle der Basisstation vorhanden ist.

## Revendications

1. Procédé d'attribution de ressource pour un système de communication mobile qui commute une station de base avec laquelle un terminal mobile (11) communique en frontière de cellule, d'une première station de base (12A) à une deuxième station de base (12B), par une commande de transfert intercellulaire, **caractérisé en ce que**
le terminal mobile notifie des informations d'attribution sur une ressource radio attribuée par la première station de base (12A), à la deuxième station de base (12B), pendant une période de transfert intercellulaire, et
la deuxième station de base (12B) compte le nombre de terminaux mobiles attribués à une ressource radio dans la première station de base (12A) pour chaque ressource radio, en fonction des informations d'attribution de ressource radio notifiées, et attribue, avec une priorité, une ressource radio pour laquelle la valeur du compte est basse, à un terminal mobile existant dans une zone de bordure de cellule d'une cellule de la deuxième station de base.

2. Procédé d'attribution de ressource pour un système de communication mobile qui commute une station de base avec laquelle un terminal mobile (11) communique en frontière de cellule, d'une première station de base (12A) à une deuxième station de base (12B), par une commande de transfert intercellulaire, **caractérisé en ce que**
la première station de base (12A) notifie des informations d'attribution sur une ressource radio, attribuée à un terminal mobile dans un processus de transfert intercellulaire, à la deuxième station de base (12B) pendant une période de transfert intercellulaire, et
la deuxième station de base (12B) compte le nombre de terminaux mobiles attribués à une ressource radio dans la première station de base (12A) pour chaque ressource radio, en fonction des informations d'attribution de ressource radio notifiées, et attribue, avec une priorité, une ressource radio pour laquelle la valeur du compte est basse, à un terminal mobile existant dans une zone de bordure de cellule d'une cellule de la deuxième station de base.

3. Procédé d'attribution de ressource selon la revendication 1 ou 2, dans lequel la deuxième station de base (12B) attribue, avec une priorité, une ressource radio ayant une valeur de compte élevée à un terminal mobile existant dans la zone centrale de la cellule de la deuxième station de base (12B).

4. Procédé d'attribution de ressource selon la revendication 3, dans lequel la deuxième station de base (12B) additionne la valeur de compte comptée en fonction des informations d'attribution de ressource radio notifiées par toutes les stations de base adjacentes, pour chaque ressource, et attribue, avec une priorité, une ressource radio pour laquelle la valeur additionnée est élevée, à un terminal mobile existant dans la zone centrale de la cellule de la deuxième station de base.

5. Procédé d'attribution de ressource selon la revendication 1 ou 2, dans lequel la deuxième station de base (12B) compte le nombre de terminaux mobiles auxquels une ressource radio est attribuée dans une station de base adjacente pour chaque ressource radio, en fonction des informations d'attribution de ressource radio notifiées du terminal mobile, et commande une valeur limite supérieure de puissance de transmission de chaque ressource radio en fonction de la valeur comptée de la ressource radio.

6. Procédé d'attribution de ressource selon la revendication 5, dans lequel la deuxième station de base (12B) attribue une ressource radio, pour laquelle la valeur du compte est basse, à un terminal mobile qui requière une puissance de transmission élevée.

7. Station de base (12) pour un système de communication mobile qui commute une station de base avec laquelle un terminal mobile communique en frontière de cellule en fonction d'une commande de transfert intercellulaire, **caractérisée en ce qu'**elle comprend :
une unité réceptrice (21) configurée pour recevoir des informations d'attribution sur une ressource radio attribuée par une station de base adjacente à un terminal mobile dans un processus de transfert intercellulaire en provenance de la station de base adjacente pendant une période de transfert intercellulaire ;
une unité de collecte (24a) configurée pour collecter des informations de ressource radio reçues de la station de base adjacente, et pour compter le nombre de terminaux mobiles auxquels une ressource radio est attribuée dans la station de base adjacente pour chaque ressource radio, en fonction des informations d'attribution de ressource radio notifiées du terminal mobile ; et
une unité d'attribution de ressource radio (24d) configurée pour attribuer, avec une priorité, une ressource radio pour laquelle la valeur du compte est basse, à un terminal mobile existant dans une zone de bordure de cellule d'une cellule de la station de base.

8. Station de base selon la revendication 7, comprenant en outre une unité de commande de puissance de transmission (27) configurée pour commander une valeur limite supérieure de la puissance de transmission de la ressource radio en fonction de la valeur de compte de la ressource radio.

9. Station de base selon la revendication 7, comprenant en outre :
une unité de spécification de forme de cellule (31) configurée pour collecter des informations de position du terminal mobile en même temps que les informations d'attribution de ressource radio, auprès du terminal mobile, et pour spécifier une forme de cellule de la station de base en fonction des informations de position collectées ; et
une unité de décision (24) configurée pour déterminer s'il existe un terminal mobile dans une zone centrale ou une zone de bordure de la cellule de la station de base, en fonction des informations de position du terminal mobile et de la forme de la cellule.
